# EUROPÄISCHE PATENTSCHRIFT

(11) **EP 3 596 405 B1**
(45) Veröffentlichungstag und Bekanntmachung des Hinweises auf die Patenterteilung: **18.08.2021**
(21) Anmeldenummer: 18715497.6
(22) Anmeldetag: 13.03.2018
(51) Int. Cl.: F24H 1/18, F24H 9/20, G05D 23/19

(54) **WARMWASSER-SPEICHER UND WARMWASSER-KLEINSPEICHER**
HOT WATER RESERVOIR AND SMALL HOT WATER RESERVOIR
BALLON D'EAU CHAUDE ET PETIT BALLON D'EAU CHAUDE

(30) Priorität: 13.03.2017 DE 102017105226
(43) Veröffentlichungstag der Anmeldung: 22.01.2020
(73) Patentinhaber: Stiebel Eltron GmbH & Co. KG, 37603 Holzminden (DE)
(72) Erfinder: HOFFMANN, Fred, 37269 Eschwege (DE); VOSSMER, Ottfried, 34369 Hofgeismar (DE); HOHOFF, Peter, 44263 Dortmund (DE)
(74) Vertreter: Eisenführ Speiser
(86) Internationale Anmeldenummer: PCT/EP2018/056221
(87) Internationale Veröffentlichungsnummer: WO 2018/167050

(56) Entgegenhaltungen:
- EP-A1- 2 551 605
- EP-A2- 2 604 946
- DE-A1- 3 516 727
- DE-A1- 3 525 323
- US-A- 4 461 949

## Beschreibung

Die vorliegende Erfindung betrifft einen Warmwasser-Speicher und einen Warmwasser-Kleinspeicher.

Warmwasserspeicher weisen einen Speicherbehälter und ein Heizelement auf, mit welchem das Wasser in dem Speicher erwärmt werden kann.

Warmwasser-Kleinspeicher weisen typischerweise ein Volumen von unter 15 Litern auf und dienen als kompakte Warmwassergeräte, welche dort eingesetzt werden, wo häufig kleinere Warmwassermengen benötigt werden. Diese Kleinspeicher können dabei beispielsweise an einem 230 V-Anschluss angeschlossen werden. Ein derartiger Kleinspeicher weist typischerweise ein Heizelement zum Aufheizen des sich in dem Speicher befindlichen Wassers auf.

Es ist eine Aufgabe der vorliegenden Erfindung einen Warmwasser-(Klein)speicher bzw. ein Verfahren zum Steuern eines Warmwasser-(Klein)speichers vorzusehen, bei welchem der Warmwasserspeicher effizienter betrieben werden kann.

Diese Aufgabe wird durch einen Warmwasser-Kleinspeicher nach Anspruch 1 bzw. Anspruch 8 gelöst.

Somit wird ein Warmwasser-Kleinspeicher mit einem Speicherbehälter für Wasser mit einem Volumen von < 15 l, einer Heizeinheit zum Heizen des Wassers in dem Speicherbehälter und einer elektronischen Regeleinheit vorgesehen. Die elektronische Regeleinheit kann mindestens zwei Betriebsarten des Kleinspeichers aktivieren. Die elektronische Regeleinheit ist dazu ausgestaltet, eine Normalbetriebsart mit einer Solltemperatur zwischen 30° und 100° C, eine Hygienebetriebsart und eine Trockengangserkennungsbetriebsart zu aktivieren.

Das Wasser in dem Speicherbehälter wird in der Hygienebetriebsart einmal in der Woche auf mindestens 70°C aufgeheizt werden. In der Trockengangserkennungsbetriebsart wird eine Temperaturdifferenz zwischen einer ersten Temperatur und einer zweiten Temperatur nach einem Aufheizen des Warmwasserspeichers ermittelt.

Gemäß einem Aspekt der vorliegenden Erfindung weist die Zeitschaltuhr-Betriebsart einstellbare Aus- und Einschaltzeiten und eine einstellbare Komforttemperatur und eine Absenktemperatur auf.

Gemäß einem Aspekt der vorliegenden Erfindung kann die Hygienebetriebsart auch aktiviert werden, wenn die Eco-Betriebsart aktiviert ist.

Gemäß einem weiteren Aspekt der vorliegenden Erfindung ist die elektronische Regeleinheit dazu ausgestaltet, eine Kochendwasserbetriebsart zu aktivieren, bei der eine Temperatur des Wassers in dem Speicherbehälter in der Nähe des Kochpunktes gehalten wird.

Die Erfindung betrifft ebenfalls ein Verfahren zum Steuern eines Warmwasser-Kleinspeichers nach Anspruch 5.

Gemäß einem weiteren Aspekt der vorliegenden Erfindung wird die Hygienebetriebsart einmal pro Woche aktiviert, um das Wasser innerhalb des Speicherbehälters auf mindestens 70°C aufzuheizen.

Die Erfindung betrifft ebenfalls einen Warmwasserspeicher mit einem Speicherbehälter für Wasser, einer Heizeinheit zum Aktivieren von Wasser in dem Speicherbehälter und einer elektronischen Regeleinheit, die dazu ausgestaltet ist, eine Normalbetriebsart mit einer Solltemperatur zwischen 30°C und 100°C, eine Hygienebetriebsart und eine Trockengangerkennungsbetriebsart zu aktivieren. Das Wasser in dem Speicherbehälter wird in der Hygienebetriebsart einmal in der Woche auf mindestens 70°C aufgeheizt werden. In der Trockengangserkennungsbetriebsart wird eine Temperaturdifferenz zwischen einer ersten Temperatur und einer zweiten Temperatur nach einem Aufheizen des Warmwasserspeichers ermittelt.

Gemäß einem Beispiel ist die elektronische Regeleinheit ferner dazu ausgestaltet, eine Eco-Betriebsart zu aktivieren.

Der Warmwasser-Speicher weist eine elektronische Regeleinheit auf, mittels welcher verschiedene (mindestens zwei) Betriebsarten des Speichers eingestellt werden können. Diese Betriebsarten können eine Normalbetriebsart (bei einer Solltemperatur zwischen 30°C und z.B. < 100°C), eine Frostschutzbetriebsart (bei einer Temperatur < 10°C und > 1°C), eine Zeitschaltuhrbetriebsart (bei der mit einer einstellbaren Zeitschaltuhr Zeiten unterschiedlicher Solltemperaturen einstellbar sind), eine ECO-Betriebsart (bei der eine elektronische Temperaturbegrenzung zwischen 30°C und 55°C eingestellt wird), eine Hygienebetriebsart (bei der eine periodische Temperaturerhöhung von ≥ 55°C bis 110°C eingestellt wird) und/oder eine Trockengangerkennungs-Betriebsart (bei der eine Temperaturdifferenz zwischen einer ersten Temperatur und einer zweiten Temperatur nach einem Aufheizen des Warmwasserspeichers ermittelt wird) darstellen.

Gemäß einem Aspekt der Erfindung weist der Kleinspeicher typischerweise einen isolierten Behälter mit einem Volumen von ≤ 15 Liter auf. Ferner weist der Kleinspeicher einen Einlauf, einen Auslauf, ein elektrisches Heizelement, eine Temperaturregeleinheit zum Einstellen der Solltemperatur und optional einen mechanischen Sicherheitstemperaturbegrenzer auf. Desweiteren weist der Speicher eine elektronische Regeleinheit zum Einstellen der jeweiligen Betriebsart auf.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt ein Zeit-Temperatur-Diagramm des Kleinspeichers in einer Normalbetriebsart,
- Fig. 2A: zeigt einen Graphen zur Veranschaulichung des Zusammenhangs zwischen der Tageszeit und der Temperatur in einem Kleinspeicher bei einer Zeitschaltuhrbetriebsart,
- Fig. 2B: zeigt einen Graphen zur schematischen Veranschaulichung einer Betriebsart mit einer täglichen Absenkung der Warmwassertemperatur für einen Kleinspeicher,
- Fig. 3: zeigt einen Grafen zur schematischen Veranschaulichung einer Betriebsart mit täglicher Absenkung und nur werktägigen ComfortAufheizung,
- Fig. 4A und 4B: zeigen jeweils Graphen zur Veranschaulichung einer individuellen Zeitprogramm-Betriebsart,
- Fig. 5A und 5B: zeigt jeweils einen Graphen zur Veranschaulichung einer ECO-Betriebsart (mit Hygienefunktion),
- Fig. 6A und 6B: zeigt einen Graphen zur Veranschaulichung einer Trockengangsschutzbetriebsart, und
- Fig. 7: zeigt ein Blockschaltdiagramm eines Warmwasserspeichers gemäß der Erfindung.

Gemäß der Erfindung wird ein Warmwasser-Speicher vorgesehen, welcher einen Einlauf, einen Auslauf, eine Heizeinheit und eine elektronische Regeleinheit aufweist.

Gemäß einem Aspekt der Erfindung weist der Warmwasser-Speicher einen Behälter mit einem Volumen von ≤ 15 Litern auf. Gemäß einem weiteren Aspekt der Erfindung kann der Speicherbehälter auch größer ausgestaltet sein.

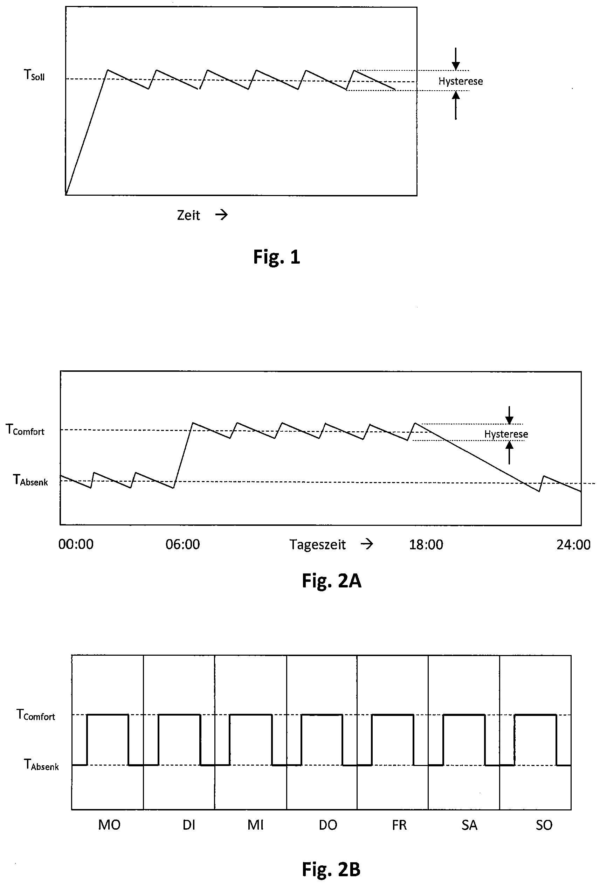

Fig. 1 zeigt ein Zeit-Temperatur-Diagramm des Kleinspeichers in einer Normalbetriebsart. In der Normalbetriebsart steuert die elektronische Regeleinheit die elektrische Heizeinheit des Warmwasser-(Klein)speichers so, dass das Wasser in dem Speicher entsprechend einer eingestellten Solltemperatur Tₛₒₗₗ in den Grenzen einer Hysterese geregelt wird. Der Sollwert kann durch Betätigen von Tasten an dem Kleinspeicher von 7°C (Frostschutz) auf 30°C bis 85°C in 0,5°C-Schritten eingestellt werden. Alternativ kann die Solltemperatur auch bis auf 100°C oder 110°C eingestellt werden. Um Kochendwasser bereitzustellen, kann die Temperatur des Wassers in dem Speicher in der Nähe des Kochpunktes gehalten werden.

Fig. 2A zeigt einen Graphen zur Veranschaulichung des Zusammenhangs zwischen der Tageszeit und der Temperatur in einem (Klein)speicher bei einer Zeitschaltuhrbetriebsart. In der Zeitschaltuhrbetriebsart können verschiedene Unterprogramme ausgewählt werden. Ferner kann eine Komforttemperatur T_{KOMFORT} und eine Absenktemperatur TABSENK eingestellt werden. Desweiteren können Zeitintervalle für das Absenken der Temperatur eingestellt werden. Durch ein tägliches Absenken der Speichertemperatur kann sich der Bereitstellungsenergieverbrauch des Speichers reduzieren, ohne dass der Nutzer Komforteinbußen hat.

So kann beispielsweise ein Unterprogramm der Zeitschaltuhrbetriebsart ein Programm für einen Privathaushalt darstellen (Fig. 2B), so dass die Wassertemperatur beispielsweise im Bereich der Komfortwassertemperatur gleich 65°C zwischen 6 Uhr und 18 Uhr erhalten wird und für die restliche Zeit eine Absenktemperatur von 45°C gewählt wird. Die Komforttemperatur, die Absenktemperatur und das Ein- und Ausschalten kann mittels eines Menüs ausgewählt werden. In Fig. 2B ist insbesondere eine Darstellung der Ein- und Ausschaltzeit vom Komfort- und Absenkbetrieb vorgesehen.

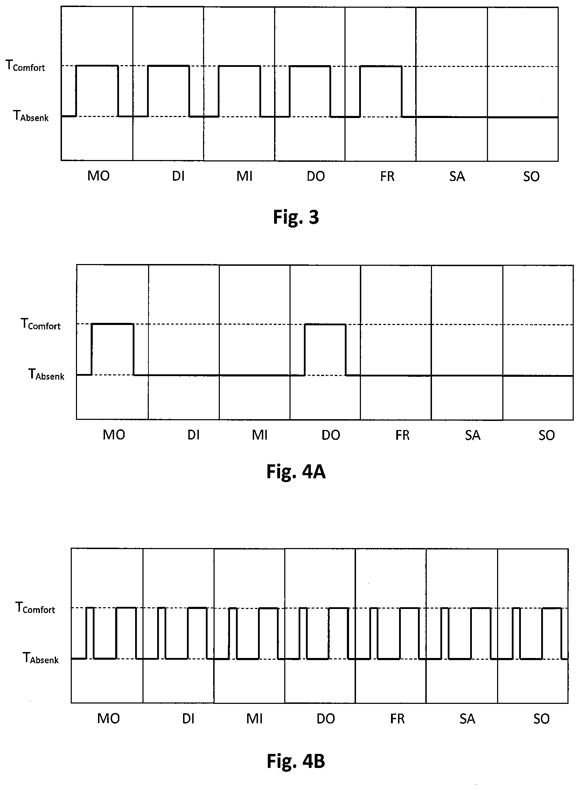

Fig. 3 zeigt einen Graphen zur schematischen Veranschaulichung einer Betriebsart mit einer täglichen Absenkung der Warmwassertemperatur für einen (Klein)speicher. In Fig. 3 ist ebenfalls eine Zeitschaltuhrbetriebsart dargestellt, wobei diese Betriebsart beispielsweise in einem Büro gewählt werden kann. Hierbei kann beispielsweise die Temperatur auf die Absenktemperatur beispielsweise am Samstag und Sonntag gewählt werden. Ansonsten kann eine Komforttemperatur von 65°C zwischen 6 Uhr und 18 Uhr eingestellt werden und eine Absenktemperatur zwischen 18 Uhr und 6 Uhr gewählt werden.

Fig. 4A und 4B zeigen jeweils Graphen zur Veranschaulichung einer individuellen Zeitprogramm-Betriebsart. In Fig. 4 ist ebenfalls eine Zeitschaltuhrbetriebsart dargestellt, welche jedoch individuell gestaltet sein kann. Insbesondere kann dabei das Ein- und Ausschalten tagesabhängig und uhrzeitabhängig gesteuert werden. Das Ein- und Ausschalten kann unterschiedlich über den Tag verteilt eingestellt werden.

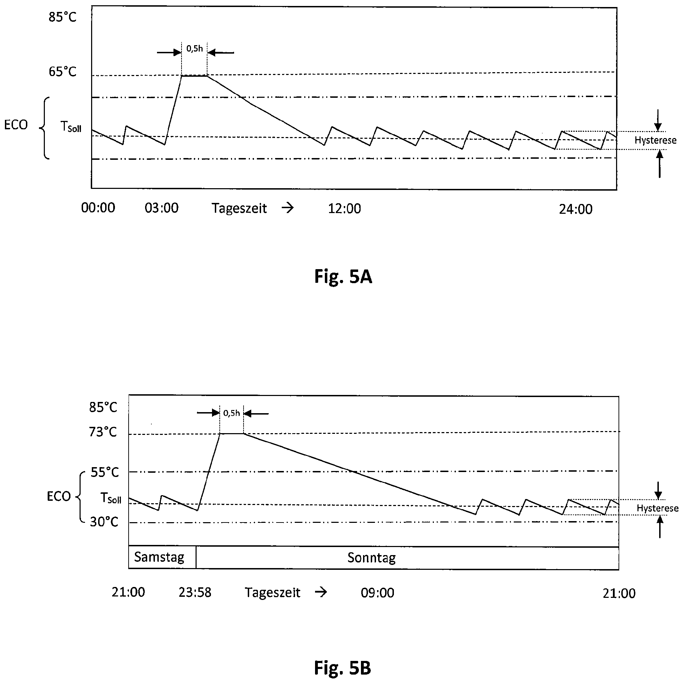

Fig. 5A und 5B zeigt einen Graphen zur Veranschaulichung einer ECO-Betriebsart. In Fig. 5 ist insbesondere die ECO-Betriebsart (mit einem reduzierten Energieverbrauch) dargestellt. Gemäß der Erfindung weist der (Klein)speicher einen isolierten Behälter auf, um Wärmeverluste zu vermeiden. Zur Energieeinsparung kann die Speichertemperatur in der ECO-Betriebsart (d.h. einer Betriebsart mit reduziertem Energieverbrauch) z.B. auf 45°C abgesenkt werden. Hierbei ist jedoch darauf zu achten, dass bei einer dauerhaften Absenkung der Temperatur unter 60°C die Gefahr der Keimbildung vorhanden ist. Daher kann das Wasser innerhalb des Speichers in (regelmäßigen) Abständen auf ≥ 60°C , z.B. mindestens 3 min auf 70°C aufgeheizt werden.

In der ECO-Betriebsart kann beispielsweise durch Betätigung einer Taste der einstellbare Temperaturbereich zwischen 30°C und 55°C eingeschränkt werden. Zusätzlich dazu kann ein Hygieneprogramm aktiviert werden, um die Keimbildung zu vermeiden. Dazu kann z.B. dann das in dem Speicher befindliche Wasser einmal am Tag auf über 60°C aufgeheizt werden wie dies in Fig. 5A dargestellt ist. Das Hygieneprogramm kann gemäß der Erfindung beispielsweise nachts um 3 Uhr gestartet werden und eine halbe Stunde dauern, so dass das Wasser auf beispielsweise 65°C aufgeheizt wird. Anschließend kann das Wasser in dem Speicher wieder auf die eingestellte Solltemperatur absenken.

Gemäß einem Aspekt der vorliegenden Erfindung kann das Hygieneprogramm den Speicher einmal wöchentlich, beispielsweise Samstagsnacht um 23:58 Uhr für beispielsweise 0,5 Stunden auf 73°C aufheizen, um damit Mikroorganismen (Keime) abzutöten, wie dies in Fig. 5B gezeigt ist. Anschließend kann das sich das im Speicher befindliche Wasser wieder abkühlen auf die eingestellte Solltemperatur.

Zum effektiven Abtöten der relevanten Mikroorganismen sollte die Wassertemperatur mindestens 70°C betragen. Bei Temperaturen von um 60°C wird das Wachstum der relevanten Mikroorganismen lediglich gehemmt. Die Aktivierung des Hygieneprogrammes einmal pro Woche ist vorteilhaft gegenüber einer Aktivierung des Hygieneprogramms einmal am Tag. Bei einer täglichen Aktivierung des Hygieneprogramms müsste das Wasser täglich auf mindestens 70°C erhitzt werden. Dies wäre jedoch nachteilig hinsichtlich der Energieeffizienz. Ferner könnte dies dazu führen, dass der Wasserspeicher schneller verkalkt. Bei einer wöchentlichen Aktivierung des Hygieneprogramms bildet sich vorteilhafterweise weniger Kalk in dem Warmwasser-Speicher.

Ein vorteilhafter Zeitpunkt für die Aktivierung des wöchentlichen Hygieneprogrammes ist beispielsweise Samstag um 23:58 Uhr (und damit eine Erhöhung der Wassertemperatur auf 73°C). Dieser Zeitpunkt stellt denjenigen Zeitpunkt dar, an welchem der Warmwasser-Speicher am wenigstens genutzt wird. Dies gilt insbesondere für eine gewerbliche Nutzung oder bei Kindertagesstätten. Somit kann sichergestellt werden, dass es nicht zu einer versehentlichen Zapfung kommt, während das Hygieneprogramm aktiviert ist und das Wasser somit auf 73°C erwärmt worden ist. Durch den oben genannten gewählten Zeitpunkt für die Aktivierung des wöchentlichen Hygieneprogramms kann ein möglichst langer Zeitraum geschaffen werden bis zur nächsten regulären Zapfung.

Bei einer privaten Nutzung wird eine Zapfstelle am Sonntag typischerweise später als an Werktagen verwendet, so dass zwischen der Hygieneaufheizung und der Nutzung mehr Zeit zum Abkühlen des gespeicherten Wassers vorhanden ist.

Optional kann die Zeitschaltuhrbetriebsart nicht aktiviert werden, wenn die ECO-Betriebsart aktiviert ist.

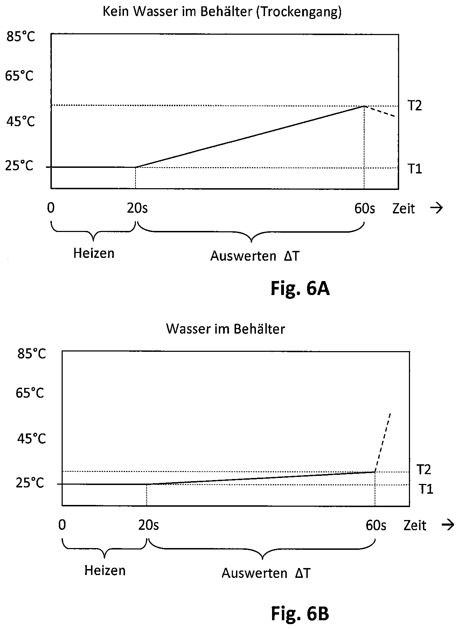

Fig. 6A und 6B zeigt einen Graphen zur Veranschaulichung einer Trockengangsschutzbetriebsart. In Fig. 6 ist insbesondere die Trockengangsschutzbetriebsart gezeigt. Warmwasserspeicher weisen typischerweise einen Sicherheitstemperaturbegrenzer STB auf, welcher die Heizeinheit deaktiviert, wenn kein Wasser in dem Speicher vorhanden ist. Die Abschalttemperatur des Sicherheitstemperaturbegrenzers beträgt typischerweise 95°C bis 130°C und liegt damit oberhalb der maximal möglichen Wassertemperatur. Die Zeit zum Abschalten der Heizleistung kann bis zu 100s betragen.

Gemäß der Erfindung wird ein elektronischer Trockengangsschutz vorgesehen. Die Wassertemperatur in dem Speicher wird mit mindestens einem Halbleitertemperatursensor (NTC-Sensor) gemessen. Bei einer Trockengangsprüfung (vor Inbetriebnahme und/oder nach jeder Netzunterbrechung) wird das Heizelement für beispielsweise 20s geheizt und in den nachfolgenden beispielsweise 40s wird ein Temperaturanstieg am Temperatursensor ermittelt. Wenn Wasser in dem Behälter vorhanden ist, dann wird die Temperatur nur geringfügig ansteigen. Ist jedoch kein Waser vorhanden, wird die Temperatur schneller ansteigen.

Erfindungsgemäß kann durch Vergleich der Temperatur vor und nach dem Heizen bestimmt werden, ob Wasser im Behälter ist oder nicht.

Wenn festgestellt worden ist, dass Wasser in dem Behälter vorhanden ist, dann kann die Heizeinheit aktiviert werden und das Wasser in dem Behälter kann aufgeheizt werden.

Wenn jedoch kein Wasser vorhanden ist, dann kann der Heizvorgang unterbrochen werden und eine Fehlermeldung kann ausgegeben werden.

Gemäß einem Aspekt der Erfindung verfügt der Warmwasserspeicher über eine Kochendwasserbetriebsart, bei der das Wasser in dem Speicher auf eine Temperatur nahe dem Kochpunkt gehalten wird. Insbesondere kann der Warmwasserspeicher so geregelt werden, dass das Wasser in dem Speicher gerade nicht den Kochpunkt erreicht.

Gemäß einem weiteren Aspekt der Erfindung kann eine Schalthysterese für das Heizelement vergrößert oder verkleinert werden, um Energie einzusparen. Insbesondere kann eine tageszeitabhängige Vergrößerung der Hysterese erfolgen. Ferner kann zur Komforterhöhung eine tageszeitabhängige Verkleinerung der Hysterese erfolgen. Eine verkleinerte Hysterese liegt vorzugsweise unter 1 K Temperaturdifferenz, insbesondere weniger als 0,5 K oder weniger als 0,2 K. Damit ist es besonders vorteilhaft die Temperatur nahe dem Kochpunkt zu halten.

Vorzugsweise wird die Hysterese verkleinert, je näher die Wassertemperatur am Kochpunkt liegt.

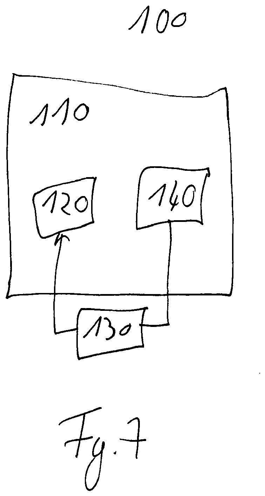

Fig. 7 zeigt ein Blockschaltbild eines Warmwasserspeichers gemäß der Erfindung. Der Warmwasserspeicher 100 weist einen Speicherbehälter 110, eine Heizeinheit 120 und eine elektronische Regeleinheit 130 auf. Optional können Temperatursensoren 140 in dem Behälter 110 vorgesehen sein.

## Patentansprüche

1. Warmwasser-Kleinspeicher (100), mit
einem Speicherbehälter (110) von < 15 Litern,
einer Heizeinheit (120) von Wasser in dem Speicherbehälter, und
einer elektronischen Regeleinheit (130), welche dazu ausgestaltet ist, eine Normalbetriebsart mit einer Solltemperatur zwischen 30°C und 100°C, eine Hygienebetriebsart und eine Trockengangserkennungsbetriebsart zu aktivieren,
wobei das Wasser in der Hygienebetriebsart einmal in der Woche auf > 70°C aufgeheizt wird,
wobei in der Trockengangserkennungsbetriebsart eine Temperaturdifferenz zwischen einer ersten Temperatur und einer zweiten Temperatur nach einem Aufheizen des Warmwasserspeichers ermittelt wird.

2. Warmwasser-Kleinspeicher nach Anspruch 1, wobei
die elektronische Regeleinheit dazu ausgestaltet ist, eine Frostschutzbetriebsart, eine Zeitschaltuhrbetriebsart oder eine ECO-Betriebsart zu aktivieren,
wobei eine Frostschutzbetriebsart bei einer Temperatur von < 10°C und > 1°C aktiviert wird,
wobei in einer Zeitschaltuhrbetriebsart einstellbare Aus- und Einschaltzeiten, eine einstellbare Komforttemperatur und eine Absenktemperatur vorgesehen ist,
wobei in einer ECO-Betriebsart eine Temperaturbegrenzung zwischen 30°C und 55°C einstellbar ist.

3. Warmwasser-Kleinspeicher nach einem der Ansprüche 1 bis 2, wobei
die Hygienebetriebsart auch aktiviert wird, wenn die ECO-Betriebsart aktiviert ist.

4. Warmwasser-Kleinspeicher nach einem der Ansprüche 1 bis 3, wobei
die elektronische Regeleinheit (130) dazu ausgestaltet ist, eine Kochendwasserbetriebsart zu aktivieren, bei der eine Temperatur des Wassers in dem Speicherbehälter in der Nähe des Kochpunktes gehalten wird.

5. Verfahren zum Steuern eines Warmwasser-Kleinspeichers (100) mit einem Speichervolumen (110) von < 15 Litern, welcher mindestens zwei Betriebsarten aufweist, mit den Schritten:
Aktivieren von einer der Betriebsart des Warmwasser-Kleinspeichers (100) durch eine elektronische Regeleinheit (130),
wobei die Betriebsarten eine Normalbetriebsart mit einer Solltemperatur zwischen 30°C und 100°C, eine Hygienebetriebsart und eine Trockengangserkennungsbetriebsart darstellt,
wobei die Hygienebetriebsart einmal wöchentlich aktiviert wird, um das Wasser innerhalb des Speicherbehälters auf mindestens 70°C aufzuheizen,
wobei in der Trockengangserkennungsbetriebsart eine Temperaturdifferenz zwischen einer ersten Temperatur und einer zweiten Temperatur nach einem Aufheizen des Warmwasserspeichers ermittelt wird

6. Verfahren nach Anspruch 5, wobei
die Betriebsarten eine Frostschutzbetriebsart, eine Zeitschaltuhrbetriebsart und eine ECO-Betriebsart umfassen,
wobei eine Frostschutzbetriebsart bei einer Temperatur von < 10°C und > 1°C aktiviert wird,
wobei in einer Zeitschaltuhrbetriebsart einstellbare Aus- und Einschaltzeiten, eine einstellbare Komforttemperatur und eine Absenktemperatur vorgesehen ist,
wobei in einer ECO-Betriebsart eine Temperaturbegrenzung zwischen 30°C und 55°C einstellbar ist.

7. Verfahren zum Steuern eines Warmwasser-Speichers nach Anspruch 5,
wobei die wöchentliche Aktivierung der Hygienebetriebsart am späten Samstagabend erfolgt.

8. Warmwasserspeicher (100), mit
einem Speicherbehälter (110) für Wasser,
einer Heizeinheit (120) zum Aufheizen von Wasser in dem Speicherbehälter, und
einer elektronischen Regeleinheit (130), welche dazu ausgestaltet ist, eine Normalbetriebsart mit einer Solltemperatur zwischen 30°C und 100°C eine Hygienebetriebsart und eine Trockengangserkennungsbetriebsart zu aktivieren,
wobei die elektronische Regeleinheit (130) dazu ausgestaltet ist, mindestens zwei der Betriebsarten des Warmwasserspeichers parallel oder sequentiell zu aktivieren,
wobei das Wasser in der Hygienebetriebsart einmal in der Woche auf > 70°C aufgeheizt wird,
wobei in der Trockengangserkennungsbetriebsart eine Temperaturdifferenz zwischen einer ersten Temperatur und einer zweiten Temperatur nach einem Aufheizen des Warmwasserspeichers ermittelt wird.

9. Warmwasserspeicher nach Anspruch 8, wobei
die elektronische Regeleinheit (130) ferner dazu ausgestaltet ist, eine ECO-Betriebsart zu aktivieren.

10. Warmwasser-Speicher nach einem der Ansprüche 8 bis 9, wobei
der Warmwasser-Speicher (100) als Kleinspeicher mit einem Speicherbehälter (110) von < 15 Liter ausgestaltet ist.

11. Warmwasser-Speicher nach einem der Ansprüche 8 bis 10, wobei die elektronische Regeleinheit (130) dazu ausgestaltet ist, eine Kochendwasserbetriebsart zu aktivieren, bei der eine Temperatur des Wassers in dem Speicher in der Nähe des Kochpunktes gehalten wird.

## Claims

1. Small water heater (100), comprising
a storage tank (110) of < 15 litres,
a heating unit (120) of water in the storage tank, and
an electronic control unit (130) configured to activate a normal mode with a set temperature of between 30 °C and 100 °C, a hygiene mode and a boil-dry detection mode,
wherein, in the hygiene mode, the water is heated to > 70 °C once a week, wherein, in the boil-dry detection mode, a temperature differential between a first temperature and a second temperature after heating of the water heater is determined.

2. The small water heater according to claim 1, wherein
the electronic control unit is configured to activate a frost protection mode, a timer mode or an ECO mode,
wherein a frost protection mode is activated at a temperature of < 10 °C and > 1 °C, wherein, in a timer mode, adjustable stop and start times, an adjustable comfort temperature, and a setback temperature are provided,
wherein, in an ECO mode, a temperature limit is adjustable between 30 °C and 55 °C.

3. The small water heater according to one of claims 1 to 2, wherein
the hygiene mode is also activated when the ECO mode is active.

4. The small water heater according to one of claims 1 to 3, wherein
the electronic control unit (130) is configured to activate a boiling water mode, in which a temperature of the water in the storage tank is maintained near the boiling point.

5. A method of controlling a small water heater (100) with a storage volume (110) of < 15 litres, which has at least two operating modes, comprising the step of:
activating one of the operating modes of the small water heater (100) by an electronic control unit (130),
wherein the operating modes represent a normal mode with a set temperature of between 30 °C and 100 °C, a hygiene mode, and a boil-dry detection mode,
wherein the hygiene mode is activated once weekly to heat the water within the storage tank to at least 70 °C,
wherein, in the boil-dry detection mode, a temperature differential between a first temperature and a second temperature after heating of the water heater is determined.

6. The method according to claim 5, wherein
the operating modes include a frost protection mode, a timer mode and an ECO mode,
wherein a frost protection mode is activated at a temperature of < 10 °C and > 1 °C,
wherein, in a timer mode, adjustable stop and start times, an adjustable comfort temperature, and a setback temperature are provided,
wherein, in an ECO mode, a temperature limit is adjustable between 30 °C and 55 °C.

7. The method of controlling a water heater according to claim 5,
wherein the weekly activation of the hygiene mode occurs late on Saturday evening.

8. Water heater (100), comprising
a storage tank (110) for water,
a heating unit (120) for heating water in the storage tank, and
an electronic control unit (130) configured to activate a normal mode with a set temperature of between 30 °C and 100 °C, a hygiene mode and a boil-dry detection mode,
wherein the electronic control unit (130) is configured to activate at least two of the operating modes of the water heater in parallel or sequentially,
wherein, in the hygiene mode, the water is heated to > 70 °C once a week,
wherein, in the boil-dry detection mode, a temperature differential between a first temperature and a second temperature after heating of the water heater is determined.

9. The water heater according to claim 8, wherein
the electronic control unit (130) is further configured to activate an ECO mode.

10. The water heater according to one of claims 8 to 9, wherein
the water heater (100) is configured as a small water heater comprising a storage tank (110) of < 15 litres.

11. The water heater according to one of claims 8 to 10, wherein the electronic control unit (130) is configured to activate a boiling water mode, in which a temperature of the water in the store is maintained near the boiling point.

## Revendications

1. Petit ballon d'eau chaude (100), comprenant
un récipient de stockage (110) de volume < 15 litres,
une unité de chauffage (120) d'eau dans le récipient de stockage, et
une unité électronique de régulation (130), conçue pour activer un mode de fonctionnement normal avec une température de consigne entre 30 °C et 100 °C, un mode de fonctionnement hygiénique et un mode de fonctionnement à détection de récipient vide,
dans lequel l'eau est chauffée à une température > 70 °C une fois par semaine dans le mode de fonctionnement hygiénique,
ledit mode de fonctionnement à détection de récipient vide permettant d'obtenir une différence de température entre une première température et une deuxième température après un chauffage du ballon d'eau chaude.

2. Petit ballon d'eau chaude selon la revendication 1,
dans lequel l'unité électronique de régulation est conçue pour activer un mode de fonctionnement hors gel, un mode de fonctionnement minuté ou un mode de fonctionnement ECO,
ledit mode de fonctionnement hors gel étant activé par une température < 10 °C et > 1 °C,
des moments de démarrage et d'arrêt réglables, une température de confort réglable et une température d'abaissement étant prévus dans ledit mode de fonctionnement minuté,
une limitation de la température entre 30 °C et 55 °C étant réglable dans le mode de fonctionnement ECO.

3. Petit ballon d'eau chaude selon l'une des revendications 1 et 2, dans lequel
le mode de fonctionnement hygiénique est également activé lorsque le mode de fonctionnement ECO est activé.

4. Petit ballon d'eau chaude selon l'une des revendications 1 à 3, dans lequel
l'unité électronique de régulation (130) est conçue pour activer un mode de fonctionnement à eau bouillante où la température de l'eau dans le récipient de stockage est maintenue proche de la température d'ébullition.

5. Procédé de commande d'un petit ballon d'eau chaude (100) dont le volume du récipient (110) est < 15 litres, présentant au moins deux modes de fonctionnement et comportant l'étape consistant à :
activer un des modes de fonctionnement dudit petit ballon d'eau chaude (100) au moyen d'une unité électronique de régulation (130),
lesdits modes de fonctionnement étant un mode de fonctionnement normal avec une température de consigne entre 30 °C et 100 °C, un mode de fonctionnement hygiénique et un mode de fonctionnement à détection de récipient vide,
dans lequel le mode de fonctionnement hygiénique est activé une fois par semaine afin de chauffer l'eau du récipient de stockage à au moins 70 °C,
ledit mode de fonctionnement à détection de récipient vide permettant d'obtenir une différence de température entre une première température et une deuxième température après un chauffage du ballon d'eau chaude.

6. Procédé selon la revendication 5, dans lequel
les modes de fonctionnement comprennent un mode de fonctionnement hors gel, un mode de fonctionnement minuté et un mode de fonctionnement ECO,
ledit mode de fonctionnement hors gel étant activé par une température < 10 °C et > 1 °C,
des moments de démarrage et d'arrêt réglables, une température de confort réglable et une température d'abaissement étant prévus dans ledit mode de fonctionnement minuté,
une limitation de la température entre 30 °C et 55 °C étant réglable dans le mode de fonctionnement ECO.

7. Procédé de commande d'un ballon d'eau chaude selon la revendication 5,
dans lequel l'activation hebdomadaire du mode de fonctionnement hygiénique a lieu en fin de soirée du samedi.

8. Ballon d'eau chaude (100), comprenant
un récipient de stockage (110) pour l'eau,
une unité de chauffage (120) pour chauffer l'eau dans le récipient de stockage, et
une unité électronique de régulation (130), conçue pour activer un mode de fonctionnement normal avec une température de consigne entre 30 °C et 100 °C, un mode de fonctionnement hygiénique et un mode de fonctionnement à détection de récipient vide,
dans lequel ladite unité électronique de régulation (130) est conçue pour activer au moins deux des modes de fonctionnement du ballon d'eau chaude en parallèle ou successivement,
dans lequel l'eau est chauffée à une température > 70 °C une fois par semaine dans le mode de fonctionnement hygiénique,
ledit mode de fonctionnement à détection de récipient vide permettant d'obtenir une différence de température entre une première température et une deuxième température après un chauffage du ballon d'eau chaude.

9. Ballon d'eau chaude selon la revendication 8, dans lequel
l'unité électronique de régulation (130) est conçue en outre pour activer un mode de fonctionnement ECO.

10. Ballon d'eau chaude selon l'une des revendications 8 et 9, dans lequel
en tant que petit ballon, le ballon d'eau chaude (100) est conçu avec un récipient de stockage (110) de volume < 15 litres.

11. Ballon d'eau chaude selon l'une des revendications 8 à 10, dans lequel l'unité électronique de régulation (130) est conçue pour activer un mode de fonctionnement à eau bouillante où la température de l'eau dans le récipient de stockage est maintenue proche de la température d'ébullition.
